# EUROPEAN PATENT APPLICATION

(11) **EP 4 797 389 A1**
(43) Date of publication of application: **26.08.2026**
(21) Application number: 25159891.8
(22) Date of filing: 25.02.2025
(51) Int. Cl.: H01M 10/6556, H01M 10/6568, H01M 10/658, H01M 50/209, H01M 50/325, H01M 50/358, H01M 50/375, H01M 10/625, H01M 50/271, H01M 50/317, H01M 50/383, H01M 50/30

(54) **BATTERY SYSTEM**

(71) Applicant: Hyundai Mobis Co., Ltd., Gangnam-gu Seoul 06141 (KR)
(72) Inventor: KI, Won Yong, 16891 Yongin-si, Gyeonggi-do (KR); LEE, Geum Hyeon, 16891 Yongin-si, Gyeonggi-do (KR); JUNG, Hye Ji, 16891 Yongin-si, Gyeonggi-do (KR); KWON, Da In, 16891 Yongin-si, Gyeonggi-do (KR); YANG, Heui Chang, 16891 Yongin-si, Gyeonggi-do (KR)
(74) Representative: Jung, Minkyu

(57) **Abstract**

A battery system (1000) including a plurality of subpacks (500) and a lower case (121) accommodating the plurality of subpacks (500) therein. Each subpack (500) includes: a lower housing in which a plurality of battery modules, electrical components, and input/output terminals are mounted; and a cooling block mounted in the lower housing. The lower housing has a double structure including: a first plate forming an outer surface of the lower housing and a second plate spaced apart from the first plate to form a venting space and forming an inner surface of the lower housing, and a slit is formed through the second plate.

## Description

### TECHNICAL FIELD

The present invention relates to a battery system, and in particular, to a battery system including a plurality of subpacks including a plurality of battery modules and a cooling block.

### BACKGROUND

A vehicle requires a source of electric energy capable of providing electric energy to start an engine or operate electronic devices of the vehicle. A high-voltage battery is an electric source that provides electric energy to start an engine or operate electronic devices of a vehicle and is typically disposed in an engine room or on a lower surface of a bottom frame of the vehicle body.

Recently, with the increasing interest in environmental protection, hybrid vehicles and electric vehicles, which are environmentally friendly and take fuel efficiency into consideration, have been actively developed in addition to existing vehicles using combustion engines. Among these vehicles, electric vehicles mainly use a motor as a main power source and use a high-voltage battery as a power source required to drive the motor.

Since high-voltage batteries are an important factor in the lifespan of electric vehicles as well as hybrid vehicles, the high-voltage batteries have to be thoroughly managed in order to operate these batteries efficiently.

However, when conventional high-voltage batteries are used for a long period of time, heat is generated by the batteries, and especially in the case of large-capacity batteries, more heat is generated as the amount of current increases during charging or discharging, and if the generated heat generated is not sufficiently removed, the performance of the batteries may deteriorate or even lead to ignition or explosion.

Therefore, it is essential to cool batteries to maintain and improve the performance of batteries. In order to guarantee the lifespan and performance of batteries used in eco-friendly vehicles, a battery cooling device is used in all eco-friendly vehicles.

Battery cooling devices are largely divided into air-cooling using air, water-cooling using coolant, and refrigerant cooling using a refrigerant depending on a cooling fluid.

Among them, a general water-cooling battery pack is structured such that battery modules, busbar and wires connecting the battery modules, and electrical components are fixed in a lower housing and an upper housing acts as a cover to seal the inside of the lower housing.

In order to discharge heat generated by battery cells forming the battery module, the battery module is immersed in coolant or a separate cooling block is assembled into the lower housing and coolant is allowed to flow into the lower housing to discharge heat of the cells through the cooling block.

However, in the case of the immersion method, since the battery pack has to be filled with coolant, a system becomes heavy and the energy density relative to the mass is low, which reduces cooling efficiency. In addition, the existing cooling block has a problem in that the battery module itself and the cooling block are integrated, making maintenance of each part difficult.

### SUMMARY

An exemplary embodiment of the present invention is directed to providing a battery system capable of securing expandability of a system and ease of maintenance by configuring independent, separate subpacks.

Another exemplary embodiment of the present invention is directed to providing a battery system capable of preventing thermal runaway occurring in one subpack from being transferred to another subpack.

The problems of the present invention are not limited to the problems mentioned above, and other problems not mentioned may be clearly understood by those skilled in the art from the description below.

In one general aspect, a battery system includes a plurality of subpacks and a lower case accommodating the plurality of subpacks, wherein each subpack includes: a lower housing in which a plurality of battery modules, electrical components, and input/output terminals are mounted; and a cooling block mounted in the lower housing, wherein the lower housing has a double structure including: a first plate forming an outer surface of the lower housing and a second plate spaced apart from the first plate to form a venting space and forming an inner surface of the lower housing, and a slit is formed through the second plate.

The first plate may include a venting valve configured to be automatically opened when the inside of the subpack has a preset pressure or higher or a preset temperature or higher.

The first plate may include a steel material.

The subpack may include a membrane at a position corresponding to the slit.

The cooling block may be mounted in a lower portion of the lower housing.

The cooling block may include a supply device configured to supply cooling fluid therein externally when a temperature of the subpack rises to a preset temperature or higher.

An inner surface of the lower housing may be coated with an insulating material or mica sheet (MICA).

The plurality of subpacks may include a first subpack set and a second subpack set arranged side by side, and the first subpack set and the second subpack set may each include a first subpack placed on a first layer and a second subpack stacked on the first subpack and placed on a second layer.

The cooling block may be disposed between the first subpack and the second subpack.

The subpack may include an insulating pad at a lower end of the first subpack and at an upper end of the second subpack, and the insulating pad may be formed of a material of EPP FOAM/MS213-41 TYPE A or SHEET DECORATION-TYPE A2 (MS711-12).

The cooling block may be disposed at a lower end of the first subpack and a lower end of the second subpack.

The subpack may include an insulating pad at the lower end of the first subpack and at the lower end of the second subpack, and the insulating pad may be formed of a material of EPP FOAM/MS213-41 TYPE A or SHEET DECORATION-TYPE A2 (MS711-12).

The subpack may include a third subpack disposed at an upper center of the first subpack set and the second subpack set.

The number of battery modules disposed inside the first subpack set and the second subpack set may be greater than the number of battery modules disposed in the third subpack.

The third subpack may include a power relay assembly (PRA) and a joint box therein.

The subpack may include a lower frame on which the third subpack is mounted, and the lower frame may be coupled to the lower case.

The subpack may include an upper housing coupled to the lower housing, and the lower housing and the upper housing may be coupled in three-axis directions including an x-axis, a y-axis, and a z-axis.

An insulating sheet may be disposed on a lower surface of the upper housing, and the insulating sheet may be MICA TAPE.

Other features and aspects will be apparent from the following detailed description, the drawings, and the claims.

### BRIEF DESCRIPTION OF THE DRAWINGS

FIG. 1 is a schematic diagram of a battery system according to an exemplary embodiment of the present invention.
FIGS. 2, 3, and 4 are schematic diagrams of subpacks according to an exemplary embodiment of the present invention, respectively.
FIG. 5 illustrates the appearance of a lower housing according to an exemplary embodiment of the present invention.
FIG. 6 illustrates a structure of a battery system according to an exemplary embodiment of the present invention.
FIGS. 7 and 8 illustrate a structure of a battery system according to another exemplary embodiment of the present invention.
FIGS. 9 and 10 illustrate a structure of a battery system according to another exemplary embodiment of the present invention.

### DETAILED DESCRIPTION

Hereinafter, exemplary embodiments of the present invention will be described in detail with reference to the accompanying drawings such that those skilled in the art may easily put the invention into practice. The invention may be embodied in various forms and is not limited to the exemplary embodiments which are described below. For the purpose of clear description of the invention, parts which are not described are omitted and like parts in the specification are referenced by like reference numerals.

In the entire specification, when it is mentioned that an element is "connected" to another element, this mention includes a case in which both elements are "directly connected to each other" and a case in which both elements are "electrically connected to each other" with another element interposed therebetween.

In the entire specification, when it is mentioned that an element is located "on" another element, this mention includes a case in which an element comes in contact with another element and a case in which still another element is present between both elements.

In the entire specification, when it is mentioned that an element "includes" another element, this means that the element may further include still another element without excluding still another element unless oppositely described. Terms, "about", "substantially", and the like indicating degrees, which are used in the entire specification when manufacturing errors and material-allowable errors specific to the mentioned meaning are given, are used to prevent an unconscientious infringer from improperly using the disclosed details. Terms, such as "step of doing" or "step of" indicating degrees, which are used in the entire specification do not mean "step for".

Hereinafter, exemplary embodiments of the present invention will be described in detail with reference to the accompanying drawings and the contents described below. However, the present invention is not limited to the exemplary embodiments described herein and may be embodied in other forms. Like reference numerals denote like elements throughout the specification.

Hereinafter, a battery system including a cylindrical battery cell according to an exemplary embodiment of the present invention will be described.

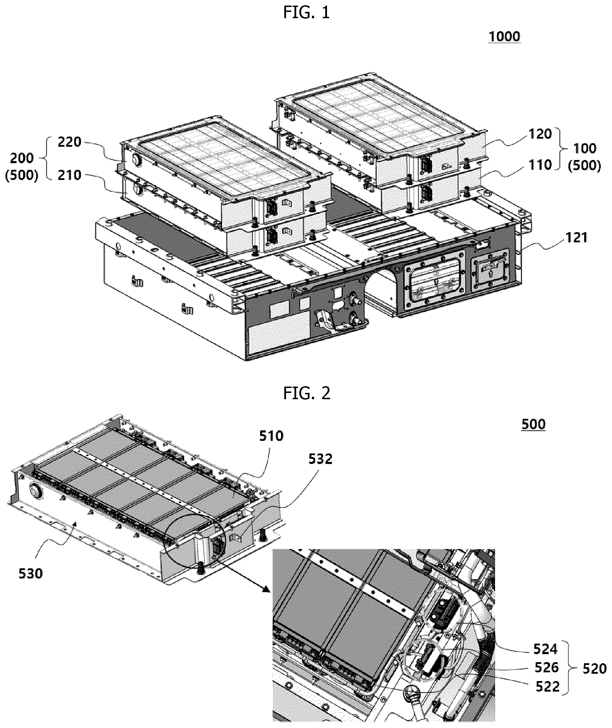

FIG. 1 is a schematic diagram of a battery system 1000 according to an exemplary embodiment of the present invention.

Referring to FIG. 1, the battery system 1000 includes a plurality of subpacks 500 and a lower case 121. The plurality of subpacks 500 are mounted in the lower case 121.

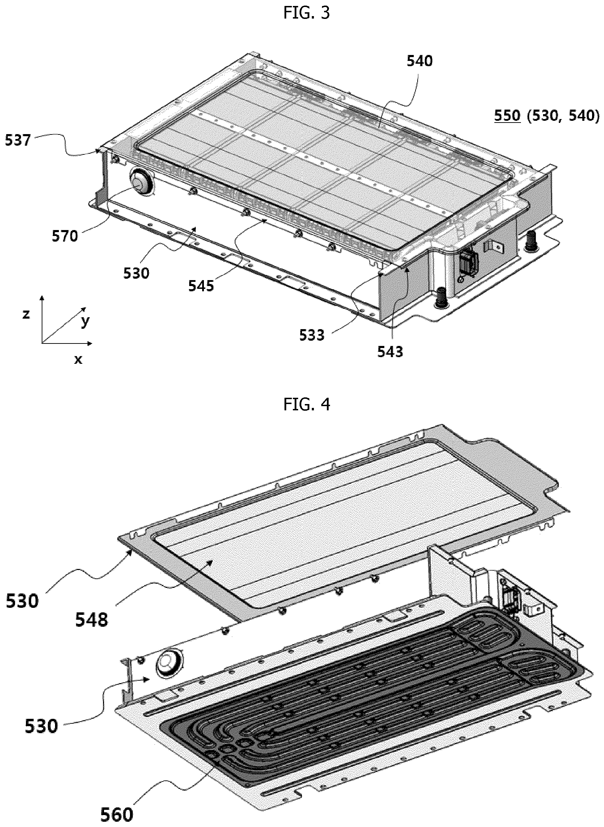

FIGS. 2 to 4 are schematic diagrams of the subpack 500 according to an exemplary embodiment of the present invention, respectively. Referring to FIGS. 2 to 3, in an example, the subpack 500 includes a housing 550, a plurality of battery modules 510, an electrical component 520, an input/output terminal 532, and a cooling block 560.

Each of the battery modules 510 includes a plurality of battery cells therein. The battery cell may be provided in a prismatic, cylindrical, pouch shape, etc. The battery module 510 is provided in plurality and the plurality of battery modules 510 are accommodated in the housing 550 described below. In an example, the battery modules 510 may be integrated to each other and mounted in the housing 550 or may be individually mounted in the housing 550.

In an example, the housing 550 includes a lower housing 530 and an upper housing 540. The lower housing 530 may be formed as an accommodation space having a volume capable of accommodating a plurality of battery modules 510. The accommodation space inside the subpack 500 is determined according to the number of battery modules 510 and the number of other electrical components 520.

In an example, the lower housing 530 may be provided in a box shape with an open top. For example, the lower housing 530 may be provided in a rectangular shape with an open top. In an example, the battery module 510 may be mounted to the lower housing 530 by a bolt. For example, the battery module 510 may be integrally mounted in the lower housing 530. The upper housing 540 is provided to shield an upper portion of the lower housing 530.

In an example, the lower housing 530 and the upper housing 540 may be assembled in three-axis directions including the x-axis, y-axis, and z-axis. In an example, the lower housing 530 and the upper housing 540 may be assembled in the z-axis and y-axis directions by bolts and may be engaged together in the x-axis direction. In contrast, bolting or engaging in each axis may be combined in a different manner, so that the lower housing 530 and the upper housing 540 may be assembled in three-axis directions including the x-axis, y-axis, and z-axis.

In an example, an engaging structure may be formed in the upper housing 540 and the lower housing 530 for an x-axis direction assembly. For example, an engaging portion 543 in the shape of a hook or a latch is formed in the upper housing 540. In addition, engaging protrusion 533 is formed in a position corresponding to the engaging portion 543 in the lower housing 530. In an example, the engaging portion 543 may be provided on two sides perpendicular to a side in which a bent portion 545 described below is formed. In an example, the engaging portion 543 includes a first engaging portion 543 and a second engaging portion 543 located opposite the first engaging portion 543, and the engaging protrusion 533 includes a first engaging protrusion 533 coupled to the first engaging portion 543 and a second engaging protrusion 533 coupled to the second engaging portion 543.

In an example, for assembly in the y-axis direction, the upper housing 540 may have a flat surface portion and a bent portion 545 extending from both ends of the flat surface portion. In an example, the bent portion 545 may be provided on two sides facing each other. When the upper housing 540 is positioned on top of the lower housing 530, the bent portion 545 is in surface contact with an upper portion of a side surface of the lower housing 530. The upper housing 540 and the lower housing 530 may be bolted by positioning a bolt in the bent portion 545.

In an example, for assembly in the z-axis direction, an upper end on a side surface of the lower housing 530 may be provided with a fastening portion 537 having a flat structure for fastening a bolt. After the upper housing 540 is placed on top of the lower housing 530, the upper housing 540 and the lower housing 530 may be bolt-fastened by positioning a bolt at a position corresponding to the fastening portion 537.

In an example, the lower housing 530 and the upper housing 540 are assembled in the x-axis direction by coupling the first engaging portion 543 and the first engaging protrusion 533 and then coupling the second engaging portion 543 and the second engaging protrusion 533. After assembling in the x-axis direction, assembling in the x-axis and z-axis directions may be performed regardless of the order.

Since the lower housing 530 and the upper housing 540 are firmly fixed on the three axes, even if thermal runaway occurs in one of the subpacks 500, the upper housing 540 may not be easily separated from the lower housing 530, thereby preventing smoke or flames from spreading to other subpacks 500 in the battery system 1000.

In an example, an insulating sheet 548 is provided in the upper housing 540. In an example, the insulating sheet 548 may be provided on a lower surface of the upper housing 540 in contact with an accommodation space in which the battery module 510 is accommodated. In an example, the insulating sheet 548 may be formed of a material having sufficient rigidity to prevent the upper housing 540 from being broken or separated. In an example, the insulating sheet 548 may be formed of a material having an insulating component. In an example, the insulating sheet 548 may be provided as MICA TAPE.

The electrical component 520 may be provided inside the subpack 500. In an example, the electrical component 520 may include a communication device 524, a sensing assembly 522, and a connector 526. For example, the communication device 524 is provided as a cell monitoring unit (CMU). The CMU is provided so as to be able to communicate with a battery management unit located outside the subpack 500. For example, the CMU may transmit battery cell information to the battery management unit through a controller area network (CAN). In an example, the CMU may be mounted at one end of battery modules mounted in a row. The sensing assembly 522 senses voltage or temperature inside the subpack 500. The connector 526 transmits a value sensed by the sensing assembly 522 to the outside of the CMU or subpack 500.

In an example, the input/output terminal 532 may be formed on an outer surface of the lower housing 530. The input/output terminal 532 enables electrical connection between the subpacks 500. In an example, a flexible busbar may be connected to the input/output terminal 532 of each subpack 500 to electrically connect the subpacks 500. In an example, a plurality of subpacks 500 may be connected in series. Alternatively, a plurality of subpacks 500 may be connected in parallel. Since the input/output terminal 532 of each subpack 500 is exposed to the outside, there is an advantage in that electrical connection between the subpacks 500 may be facilitated even when the subpacks 500 are stacked or arranged to be spaced apart from each other.

In an example, the subpack 500 may be assembled with other components in addition to the components described above, depending on the situation. For example, a power relay assembly (PRA) and a joint box may be provided inside the subpack 500. The PRA is mainly installed in the high-voltage battery system 1000 assembly and includes a positive (+) high-voltage control main relay, a negative (-) high-voltage control main relay, a pre-charge relay, a pre-charge resistor, a battery current sensor, etc. The PRA serves to turn on or off and control a high voltage between the high-voltage battery pack and the high-voltage joint box by a control signal from a battery management system (BMS) or an electronic control unit (ECU). The PRA is provided to be connected to the input/output terminal 532.

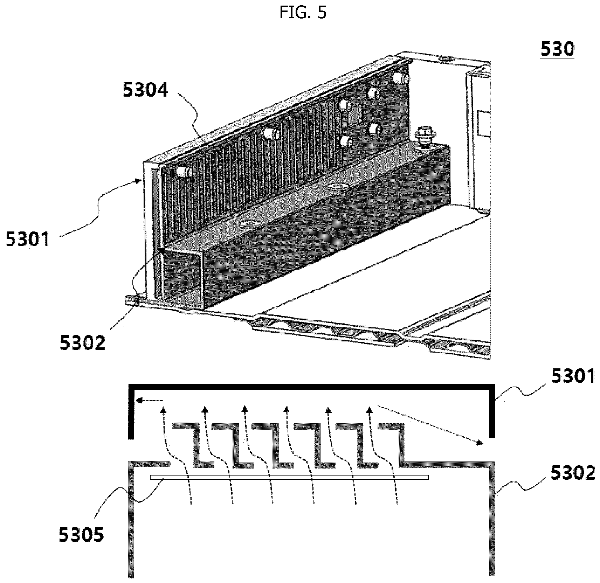

FIG. 5 illustrates the appearance of the lower housing 530 according to an exemplary embodiment of the present invention.

Referring to FIG. 5, the lower housing 530 may be provided in a double structure. For example, the side surface of the lower housing 530 includes a first plate 5301 and a second plate 5302. The first plate 5301 constitutes the outer surface of the lower housing 530. In an example, the first plate 5301 may be formed of a steel material. This is to secure the rigidity of the outer surface of the lower housing 530.

The second plate 5302 is spaced apart from the first plate 5301 by a predetermined distance and forms the inner surface of the lower housing 530. In an example, a long and thin slit 5304 is formed to penetrate the second plate 5302. Heat and smoke due to thermal runaway occurring in the battery module 510 are discharged through the slit 5304. In an example, a venting valve 570 is provided in the lower housing 530. In an example, the venting valve 570 is provided in the first plate 5301. When smoke occurs due to thermal runaway or the like inside the subpack 500, the emitted smoke escapes to the outside through the venting valve 570. The venting valve 570 prevents a momentary pressure or temperature increase inside the subpack 500 to prevent ignition or explosion of the subpack 500. In an example, the venting valve 570 may be provided to be automatically opened at a preset pressure or preset temperature.

The heat and smoke escaping through the slit 5304 are discharged to the venting valve 570 through the venting space between the first plate 5301 and the second plate 5302. As the space is formed between the first plate 5301 and the second plate 5302, there is an effect of preventing expansion of the battery module 510 due to smoke.

In an example, a membrane 5305 is provided on the second plate 5302. The membrane 5305 is provided at a position corresponding to the slit 5304 to secure watertightness of the lower case 121. For example, the membrane 5305 may be mounted inside the second plate 5302 to correspond to the slit 5304. In an example, the membrane 5305 may be formed of a material that may be extinguished by highpressure gas or flame.

In an example, the insulating sheet 548 is provided in the lower housing 530. In an example, the insulating sheet 548 may be provided on the inner surface of the lower housing 530 in which the battery module 510 is accommodated. For example, the insulating sheet 548 may be coated on the inner surface of the lower housing 530. In an example, the insulating sheet 548 may be formed of a material having sufficient rigidity to prevent the upper housing 540 from being broken or separated. In an example, the insulating sheet 548 may be formed of a material having an insulating component. In an example, the insulating sheet 548 may be provided as MICA TAPE.

The cooling block 560 is provided at a lower end of each subpack 500. In an example, the cooling block 560 may be provided so that cooling fluid may flow therein. In an example, the cooling block 560 may be provided in a zigzag shape.

In an example, the cooling block 560 may be provided so that the cooling fluid therein may be supplied to the outside when the temperature of the subpack 500 rises to a preset temperature or higher. For example, the cooling block 560 includes a supply device (not shown), such as a nozzle or a sprinkler, and the supply device (not shown) is provided so as to be able to communicate with a temperature sensor inside the subpack 500.

In an example, an insulating pad may be provided in a lower portion of the cooling block 560. The cooling block 560 prevents cold air of the cooling block 560 from escaping to the outside. In an example, the insulating pad may be provided as EPP FOAM/MS213-41 TYPE A or SHEET DECORATION-TYPE A2 (MS711-12).

In an example, an insulating pad may include at least one of a heat-dissipating metal material, a graphite-based material, and a silica-based material, or a combination thereof.

An insulating pad described below is located below the cooling block 560 and prevents deterioration of the cooling performance of the cooling block 560 due to overheating of the battery module 510.

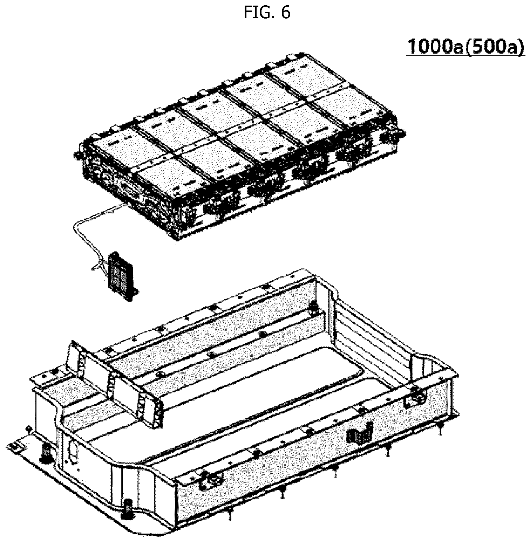

FIG. 6 illustrates a structure of a battery system 1000a according to an exemplary embodiment of the present invention. Referring to FIG. 6, a plurality of subpacks 500a may be provided in a single-layer structure. For example, the plurality of subpacks 500a may be mounted in two rows on the lower case 121.

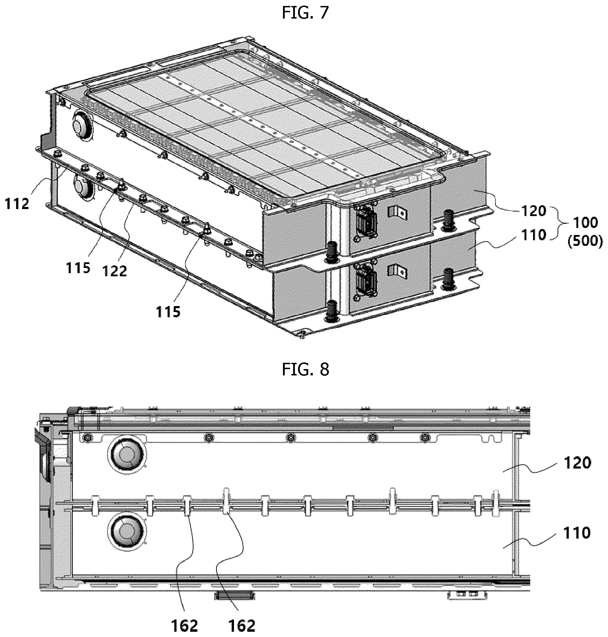

FIG. 7 illustrates a structure of the battery system 1000 according to another exemplary embodiment of the present invention.

Referring back to FIG. 1, in an example, the plurality of subpacks 500 may be provided in a stacked structure. As illustrated in FIG. 1, the plurality of subpacks 500 may be provided in a two-layer structure.

In an example, the subpack 500 may include first subpacks 110 and 210 placed in a first layer and second subpacks 120 and 220 stacked on the first subpacks 110 and 210 and placed in a second layer. In an example, the first subpacks 110 and 210 and the second subpacks 120 and 220 may be provided in two units each. However, alternatively, the first subpacks 110 and 210 and the second subpacks 120 and 220 may be provided in more or less units than this. Alternatively, the first subpacks 110 and 210 and the second subpacks 120 and 220 may be provided in different units depending on the design.

In an example, the first subpacks 110 and 210 may include only the lower housing 530, and the second subpacks 120 and 220 may include the lower housing 530 and the upper housing 540. Since the second subpacks 120 and 220 are positioned on the first subpacks 110 and 210, the second subpacks 120 and 220 may serve as a cover for the first subpacks 110 and 210, and thus, the upper housing 540 may not be provided additionally. Accordingly, the overall weight of the battery system 1000 may be reduced.

FIG. 7 is a drawing illustrating a coupling structure between a plurality of subpacks 500.

In an example, a guide pin 115 may be installed in a first coupling portion 112 having a flat shape formed at an upper end of a side surface of the lower housing 530 of the first subpacks 110 and 210. In addition, a through-hole may be formed in a position corresponding to the guide pin 115 in the second coupling portion 122 at a lower end of the side surface of the lower housing 530 of the second subpacks 120 and 220. The guide pin 115 of the first subpacks 110 and 210 is connected through the through-hole of the second subpacks 120 and 220. Accordingly, the position at which the second subpacks 120 and 220 are placed on the first subpacks 110 and 210 is guided. In an example, the first subpacks 110 and 210 and the second subpacks 120 and 220 may be connected by bolting. For example, the first coupling portion 112 and the second coupling portion 122 may be connected by a bolt 162.

In an example, a direction of the bolt 162 fastened to the first coupling portion 112 and the second coupling portion 122 may be alternately provided as shown in FIG. 8. Accordingly, the first subpacks 110 and 210 and the second subpacks 120 and 220 may be firmly fastened.

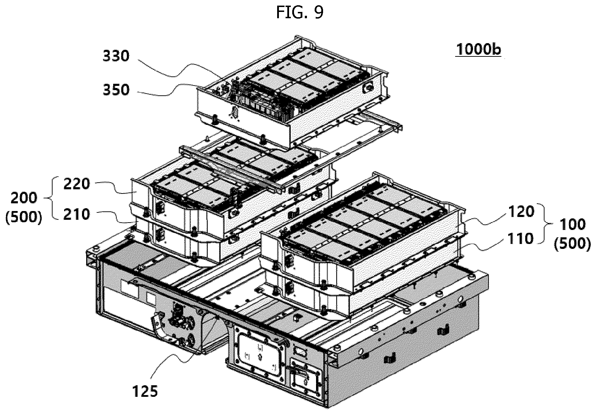

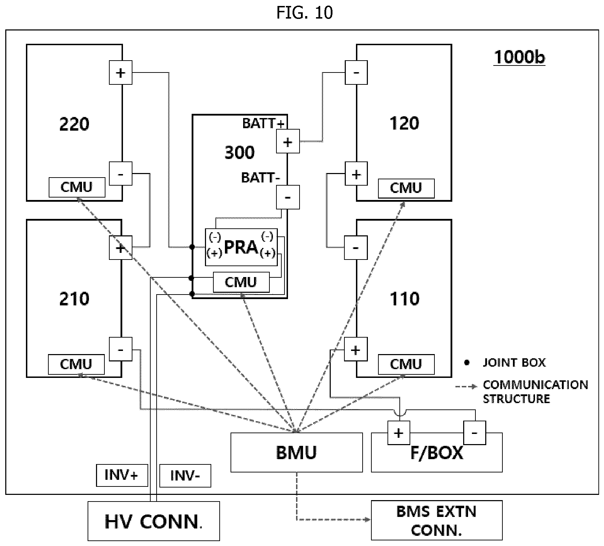

FIGS. 9 and 10 illustrate a structure of a battery system 1000b according to another exemplary embodiment of the present invention. Referring to FIG. 9, in an example, a plurality of subpacks 500 may be provided in a three-layer structure. For example, first and second layers may have the same structure as that described above with reference to FIG. 1. For example, the subpack 500 may include a first subpack 500, a second subpack 500, and a third subpack 500. The third subpack 300 is located in the third layer of the subpack 500.

In an example, two first subpacks 110 and 210 and two second subpacks 120 and 220 may be provided. The first subpacks 110 and 210 and the second subpacks 120 and 220 may be arranged side by side, respectively. The first subpacks 110 and 210 and the second subpacks 120 and 220 arranged on one side are defined as a first subpack set 100, and the first subpacks 110 and 210 and the second subpacks 120 and 220 arranged on the other side are defined as a second subpack set 200.

The third subpack 300 may be arranged between the first subpack set 100 and the second subpack set 200. This is for the purpose of balancing the battery system 1000b. In an example, the third subpack 300 may be mounted on the lower frame 310. The lower frame 310 is coupled to the lower case 121.

In an example, the lower frame 310 is provided in a rectangular shape so that a lower edge of the third subpack 300 may be mounted. A coupling frame 125 is provided in a position corresponding to the lower frame 310 at the upper end of the lower case 121. As the lower frame 310 and the coupling frame 125 are bolted together, the third subpack 300 is seated above the first subpack set 100 and the second subpack set 200.

In an example, the first subpack set 100 and the second subpack set 200 may include a greater number of battery modules 510 than the third subpack 300. For example, the first subpack set 100 and the second subpack set 200 may include five battery modules 510 each, and the third subpack 300 may include three battery modules 510.

In an example, a PRA 330 and a joint box 350 may be provided inside the third subpack 300, and the PRA 330 and the joint box 350 may not be provided inside the first subpack set 100 and the second subpack set 200.

This is to reduce the weight of the third subpack 300 located at the top and prevent overheating of the third subpack 300, which may be relatively vulnerable to cooling.

In the above example, the cooling block 560 is described as being provided at the lower end of each of the subpacks 500. However, in another example, the cooling block 560 may be provided only between the first subpack 500 and the second subpack 500. For example, the cooling block 560 may be provided between the top of the first subpack 500 and the bottom of the second subpack 500. This is to reduce the weight and cost of the battery system 1000 by reducing the number of cooling blocks 560.

In the above example, the insulating pad is described as being provided at the bottom of the cooling block 560. However, alternatively, the insulating pad may be provided at the bottom of the first subpack 500 and the top of the second subpack 500. This is to ensure that the insulating pad has a heat-insulating function in the event of a fire due to a short-circuit.

According to the present invention, since the independent subpack 500 is configured, there is an advantage in that the battery system 1000 is easily configured. In an example, the battery system 1000 may be configured by varying the number of subpacks 500 depending on the size of a vehicle. For example, a light vehicle may be configured to include two subpacks 500, a truck may be configured to include five subpacks 500, and a medium- to large-sized passenger vehicle may be configured to include eight subpacks 500.

In addition, according to the present invention, since the independent subpack 500 ensures safety against fire and external impact, there is an advantage in that a problem occurring in a local area does not spread to the entire system, thereby minimizing damage.

In addition, according to the present invention, since the independent subpack 500 is provided, there is an advantage in that it is easy to transport the independent subpack 500 in the manufacturing of the battery system 1000 and the configuration of a production line may be minimized.

In addition, according to the present invention, there is an advantage in that the subpack 500 structure may be applied regardless of a battery cell type.

The above description of the illustrative exemplary embodiments is provided for the purpose of illustration, and it would be understood by those skilled in the art that various changes and modifications may be made without changing the technical concept and essential features of the illustrative exemplary embodiments. Thus, it is clear that the above-described illustrative exemplary embodiments are illustrative in all aspects and do not limit the present invention. For example, each component described to be of a single type may be implemented in a distributed manner. Likewise, components described to be distributed may be implemented in a combined manner.

The scope of the inventive concept is defined by the following claims and their equivalents rather than by the detailed description of the illustrative exemplary embodiments. It shall be understood that all modifications and exemplary embodiments conceived from the meaning and scope of the claims and their equivalents are included in the scope of the inventive concept.

## Claims

1. A battery system comprising:
a plurality of subpacks and a lower case accommodating the plurality of subpacks,
wherein each subpack includes:
a lower housing in which a plurality of battery modules, electrical components, and input/output terminals are mounted; and
a cooling block mounted in the lower housing,
wherein the lower housing has a double structure including a first plate forming an outer surface of the lower housing and a second plate spaced apart from the first plate to form a venting space and forming an inner surface of the lower housing, and
a slit is formed through the second plate.

2. The battery system of claim 1, wherein the first plate includes a venting valve configured to be automatically opened when the inside of the subpack has a preset pressure or higher or a preset temperature or higher.

3. The battery system of claim 1 or 2, wherein the first plate includes a steel material.

4. The battery system of any one of claims 1 to 3, wherein the subpack includes a membrane at a position corresponding to the slit.

5. The battery system of any one of claims 1 to 4, wherein the cooling block is mounted in a lower portion of the lower housing.

6. The battery system of any one of claims 1 to 5, wherein the cooling block includes a supply device configured to supply cooling fluid therein externally when a temperature of the subpack rises to a preset temperature or higher.

7. The battery system of any one of claims 1 to 6, wherein the inner surface of the lower housing is coated with an insulating material or mica sheet (MICA).

8. The battery system of any one of claims 1 to 7, wherein the plurality of subpacks includes a first subpack set and a second subpack set arranged side by side, and the first subpack set and the second subpack set each include a first subpack placed on a first layer and a second subpack stacked on the first subpack and placed on a second layer.

9. The battery system of claim 8, wherein the cooling block is disposed between the first subpack and the second subpack.

10. The battery system of claim 8 or 9, wherein the subpack includes an insulating pad at a lower end of the first subpack and at an upper end of the second subpack, and the insulating pad is formed of a material of EPP FOAM/MS213-41 TYPE A or SHEET DECORATION-TYPE A2 (MS711-12).

11. The battery system of claim 8, wherein the cooling block is disposed at a lower end of the first subpack and a lower end of the second subpack.

12. The battery system of claim 8 or 11, wherein the subpack includes an insulating pad at the lower end of the first subpack and at the lower end of the second subpack, and the insulating pad is formed of a material of EPP FOAM/MS213-41 TYPE A or SHEET DECORATION-TYPE A2 (MS711-12).

13. The battery system of any one of claims 8 to 12, wherein the subpack includes a third subpack disposed at an upper center of the first subpack set and the second subpack set.

14. The battery system of claim 13, wherein a number of battery modules disposed inside the first subpack set and the second subpack set is greater than a number of battery modules disposed in the third subpack.

15. The battery system of claim 13 or 14, wherein the third subpack includes a power relay assembly (PRA) and a joint box therein.
